# EUROPÄISCHE PATENTSCHRIFT

(11) **EP 3 608 676 B1**
(45) Veröffentlichungstag und Bekanntmachung des Hinweises auf die Patenterteilung: **19.01.2022**
(21) Anmeldenummer: 18188008.9
(22) Anmeldetag: 08.08.2018
(51) Int. Cl.: G01N 35/10, G01N 35/00, B01L 9/00, B01L 3/00, B01L 9/06

(54) **EINFÜLLEN DER PROBE IN DEN PIPETTENSPITZENBEHÄLTER ZUR WEITEREN BEARBEITUNG**
INSERT SAMPLE INTO PIPETTE TIP BOX FOR FURTHER PROCESSING
METTRE L'ÉCHANTILLON DANS LE RÉCIPIENT DE POINTE DE PIPETTE POUR UN POSTTRAITEMENT

(43) Veröffentlichungstag der Anmeldung: 12.02.2020
(73) Patentinhaber: CTC Analytics AG, 4222 Zwingen (CH)
(72) Erfinder: RODONI, Michele, 1796 Courgevaux (CH); ZUMBACH, Melchior, 5600 Lenzburg (CH)
(74) Vertreter: Keller Schneider Patent- und Markenanwälte AG (Bern)

(56) Entgegenhaltungen:
- EP-A2- 1 855 802
- WO-A1-2016/168692
- Siderovski P. David: "Methods in Enymology. Volume 389 - Part A. Section II. G-protein regulators of model organisms" In: "Methods in Enymology. Volume 389 - Part A. Section II. G-protein regulators of model organisms", 31. Dezember 2004 (2004-12-31), Elsevier, XP055556373, ISBN: 978-0-08-049726-6 Seiten 326-328, * Seite 327 *

## Beschreibung

### Technisches Gebiet

Die Erfindung betrifft ein Verfahren zur automatisierten Bearbeitung einer Probe unter Verwendung eines ersten Pipettenspitzenbehälters mit einer ersten Pipettenspitze, wobei die erste Pipettenspitze aus dem ersten Pipettenspitzenbehälter entnommen wird. Weiter umfasst die Erfindung ein Rack umfassend mindestens einen ersten Pipettenspitzenbehälter mit einer ersten Pipettenspitze sowie eine Transportanordnung umfassend mindestens zwei Racks.

### Stand der Technik

Pipetten, insbesondere Mikropipetten werden unter anderem in der chemischen und biologischen Analytik in grossen Mengen eingesetzt. Aufgrund der Reinheitsanforderungen in einem Analysenlabor werden typischerweise Pipetten in Form von Disposals eingesetzt, welche unmittelbar nach deren Verwendung entsorgt werden.

Insbesondere bei automatischen Analysengeräten werden bevorzugt Pipettenspitzen eingesetzt, welche an eine Pipettiervorrichtung befestigt werden können. Mit der Pipettiervorrichtung kann nun eine Probe in die Pipettenspitze aufgezogen und ausgestossen werden. In der Verwendung kommt nur die Pipettenspitze mit der Probe in Berührung.

Die Pipettenspitzen werden eingesetzt, um Proben zu transportieren. Im Analysenverfahren kann die Probe zum Beispiel zu einer Bearbeitungsstation transportiert werden, wo die Probe für eine anschliessende Analyse aufbereitet wird. Die Aufbereitung der Probe kann zum Beispiel ein Verdünnen und Durchmischen der Probe umfassen.

Die EP 1 855 802 A2 betrifft ein Analyseninstrument zum Ermitteln von Eigenschaften einer biologischen oder biochemischen Probe. Der Verwender füllt Proben in individuelle Vials, in einen PCR-Strip oder in eine Multi-Well Plate. Die Pipettenspitzen können in einem entfernbaren Pipettenspitzenbehälter aufgenommen sein. Eine benutzte Pipettenspitze kann im Pipettenspitzenbehälter über einen Flansch abgestreift werden.

Die bekannten Verfahren haben den Nachteil, dass diese sehr aufwendig und damit teuer sind. Insbesondere ist die Probenaufbereitung mit vielen Arbeitsschritten verbunden, bei welchen eine grosse Menge Abfall respektive verunreinigte Geräte anfallen.

### Darstellung der Erfindung

Aufgabe der Erfindung ist es, eine dem eingangs genannten technischen Gebiet zugehörendes Verfahren zum automatisierten Bearbeiten einer Probe zu schaffen, welches besonders kostengünstig und platzsparend durchführbar ist.

Die Lösung der Aufgabe ist durch die Merkmale des Anspruchs 1 definiert. Gemäss der Erfindung werden die folgenden beiden Schritte ausgeführt:
- Einfüllen der Probe in den ersten Pipettenspitzenbehälter;
- Bearbeitung der Probe im ersten Pipettenspitzenbehälter.

Damit wird gemäss der Erfindung nun die Probe in einem Pipettenspitzenbehälter bearbeitet, d.h. der Pipettenspitzenbehälter kann damit zur Bearbeitung einer Probe verwendet werden. Dies hat den Vorteil, dass keine separaten Behälter für die Bearbeitung der Proben benötigt werden. Damit kann das Verfahren besonders kostengünstig und platzsparend ausgeführt werden. Durch die Reduktion des Verbrauchsmaterials wird weiter ein besonders ökologisches Verfahren erreicht.

Die Verwendung des Pipettenspitzenbehälters hat den besonderen Vorteil, dass dieser bereits als steril verpackter Behälter vorliegt. Damit eignet sich der Pipettenspitzenbehälter besonders gut zur Bearbeitung einer Probe. Damit kann die bislang nicht weiter verwendete Sterilität des leeren Pipettenspitzenbehälters für die Bearbeitung einer Probe, insbesondere für die Vorbereitung einer Probe für eine anschliessende Analyse genutzt werden. Damit wird ein besonders ökonomisches und ökologisches Verfahren erreicht.

Dadurch, dass der Pipettenspitzenbehälter für die Bearbeitung der Probe verwendet wird, kann weiter ein platzsparendes Verfahren bereitgestellt werden. So muss kein zusätzlicher Platz für die Bearbeitung der Probe bereitgestellt werden.

Die x-, y- und z-Richtung wird als kartesisches Koordinatensystem verstanden. Die x- und y- Richtungen bilden dabei eine horizontale Ebene, die z-Richtung bildet die Vertikale ab, soweit nichts anderes geschrieben ist.

Unter dem Ausdruck "a und/oder b" sind die Ausdrücke "a", "b" sowie "a und b" subsummiert.

Der Pipettenspitzenbehälter ist vorzugsweise als Behälter aus Kunststoff, insbesondere zum Beispiel aus einem thermoplastischen Kunststoff wie Acrylnitril-Butadien-Styrol (ABS), Polyamide (PA), Polylactat (PLA), Polymethylmethacrylat (PMMA), Polycarbonat (PC), Polyethylenterephthalat (PET), Polyethylen (PE), Polypropylen (PP), Polystyrol (PS), Polyetheretherketon (PEEK) und Polyvinylchlorid (PVC), besonders bevorzugt aus Polypropylen (PP) ausgebildet. Er kann aber auch aus anderen Materialien, wie zum Beispiel einem Verbundwerkstoff oder einem beschichteten Werkstoff ausgebildet sein. Insbesondere kann beispielswiese ein kartonartiger Werkstoff mit einer fluiddichten Innenbeschichtung als Pipettenspitzenbehälter vorgesehen sein. Dem Fachmann sind weitere geeignete Materialien und Materialkompositionen bekannt.

Der Pipettenspitzenbehälter weist vorzugsweise die Form eines einseitig geschlossenen Zylinders, insbesondere eines Kreiszylinders auf. Der Pipettenspitzenbehälter ist im Wesentlichen der Form der Pipettenspitze angepasst.

Die Pipettenspitze ist vorzugsweise als Wegwerfartikel respektive als sogenanntes Disposal ausgebildet. Die Pipettenspitze ist vorzugsweise zum Dosieren von Volumina im Bereich von unter 5 ml, vorzugsweise im Bereich von unter 2 ml, besonders bevorzugt in einem Bereich von unter 1.5 ml ausgelegt. In einer besonders bevorzugten Ausführungsform beträgt das Dosiervolumen der Pipettenspitze ungefähr 1000 µl. In Varianten kann das Dosiervolumen der Pipettenspitze aber auch grösser als 5 ml sein, insbesondere zum Beispiel 10 ml oder mehr. In weiteren Ausführungsformen kann das Volumen auch deutlich unter 1000 µl, insbesondere zum Beispiel bei 200 µl oder bei 20 µl liegen.

Der Pipettenspitzenbehälter ist ebenfalls vorzugsweise als Wegwerfartikel ausgebildet. Der Pipettenspitzenbehälter weist vorzugsweise ein Volumen von weniger als 10 ml, vorzugsweise weniger als 5 ml, besonders bevorzugt weniger als 3 ml auf. In einer besonders bevorzugten Ausführungsform umfasst der Pipettenspitzenbehälter ein Volumen von ungefähr 3000 µl. In Varianten kann das Volumen des Pipettenspitzenbehälters aber auch grösser als 5 ml sein, insbesondere zum Beispiel 10 ml oder mehr, oder auch deutlich unter 3000 µl liegen, insbesondere zum Beispiel bei 500 µl oder bei 60 µl liegen. Das Volumen der Pipettenspitzenbehälter wird insbesondere bevorzugt der Pipettenspitze sowie der vorgesehenen Anwendung als Dilutionsgefäss angepasst.

Vorzugsweise wird die Pipettenspitze durch einen Pipettierroboter verfahren. Der Pipettierroboter umfasst dazu eine Pipette, vorzugsweise eine Kolbenpipette, an welcher die Pipettenspitze befestig werden kann. Die Pipettenspitze wird vorzugswiese über einen Reibschluss, wobei die Pipette in einer Pipettenlängsrichtung in ein oberes Ende der Pipettenspitze eingesteckt wird. Die Pipette weist dazu einen dem Innenkonus der Pipettenspitze entsprechenden Aussenkonus auf. Damit wird ein besonders einfaches Befestigen der Pipettenspitze an der Pipette erreicht.

Der Pipettierroboter kann als universeller Roboter vorgesehen sein, welcher insbesondere zum Beispiel auch eine Spritze mit einer Kanüle, ein Vial etc. transportieren kann.

In Varianten kann die Pipettenspitze auch anderweitig transportiert werden. Weiter kann die Pipettenspitze hinsichtlich der x, y-Ebene ortsfest und beispielswiese nur in z-Richtung verfahrbar sein, während der Pipettenspitzenbehälter respektive weitere Probengefässe bewegt werden.

Vorzugsweise ist die Probe eine Flüssigkeit. Besonders bevorzugt handelt es sich bei der Probe um eine zu analysierende Flüssigkeit. Die Flüssigkeit kann besonders einfach mit einem Pipettierroboter zum Pipettenspitzenbehälter und/oder zu einem Analysengerät transportiert werden. Die Flüssigkeit kann ein Lösemittel wie zum Beispiel Wasser, Kohlenwasserstoffe, Alkohole, Ether etc. umfassen. Die Flüssigkeit kann als Lösung vorliegen. Die Flüssigkeit kann insbesondere auch eine Suspension, eine Emulsion etc. umfassen.

In Varianten kann die Probe auch als Feststoff vorliegen. In diesem Fall kann die Bearbeitung der Probe zum Beispiel ein Auflösen der Probe in einem Lösemittel umfassen.

Bevorzugt wird die Probe mit einer Pipettenspitze, insbesondere der ersten Pipettenspitze in den ersten Pipettenspitzenbehälter eingefüllt. Damit kann eine besonders effiziente und ökonomische Bearbeitung einer Probe erreicht werden. Die Verwendung der Pipettenspitze des Pipettenspitzenbehälters hat weiter den Vorteil, dass diese dem Pipettenspitzenbehälter entsprechend geformt sein kann, womit ein Einfüllen der Probe in den Pipettenspitzenbehälter optimiert werden kann. Die Pipettenspitze kann damit zum Beispiel besonders tief in den Pipettenspitzenbehälter eingeführt werden, womit eine Kontamination der Umgebung mit der Probe vermieden werden kann.

Falls die Probe mit einer Lösung, insbesondere zum Beispiel mit einer Verdünnungslösung versetzt werden soll, kann in einem bevorzugten Verfahren in einem ersten Schritt die Verdünnungslösung in den Pipettenspitzenbehälter und in einem zweiten, nachfolgenden Schritt die Probe in den Pipettenspitzenbehälter eingefüllt werden. Damit kann eine Kontamination der Lösung mit der Probe vermieden werden. Alternativ kann das Verfahren auch in umgekehrter Reihenfolge ablaufen, wobei die Probe vor der Verdünnungslösung in den Pipettenspitzenbehälter eingebracht wird.

In Varianten kann die Probe auch mit einer Spritze, einer Pumpe, einem Behälter oder anderweitigen Mitteln in den Pipettenspitzenbehälter eingefüllt werden. Insbesondere muss der Pipettenspitzenbehälter nicht zwingend in demselben Verfahren zur Bearbeitung einer Probe verwendet werden, in welchem die Pipettenspitze verwendet wird.

Vorzugsweise umfasst die Bearbeitung der Probe eine physikalische oder chemische Behandlung der Probe im Pipettenspitzenbehälter. Die Bearbeitung der Probe kann mehrere Verfahrensschritte umfassen.

In Varianten kann die Bearbeitung der Probe lediglich eine Verteilung oder Portionierung der Probe umfassen.

Bevorzugt umfasst die Bearbeitung der Probe das Versetzen der Probe im Pipettenspitzenbehälter mit einer Substanz, insbesondere einer Flüssigkeit, vorzugsweise einer Reagens. Damit kann die Probe für eine nachfolgende Analyse aufbereitet werden. Die Substanz kann dabei mehrere Funktionen erfüllen. Zum Beispiel können durch den Zusatz der Substanz bestimmte Stoffe ausgefällt werden. Weiter kann der Analyt oder Stoffe der Matrix chemisch umgesetzt werden, insbesondere um zum Beispiel eine Analyse zu vereinfachen. Der Analyt kann damit zum Beispiel für die Analyse markiert oder durch das Umsetzen von Säuren respektive Base zu einem Salz und vice versa der Löslichkeit der Analysenmethode angepasst werden. Dem Fachmann sind beliebig viele Methoden bekannt, mit welchen ein Analyt respektive die Matrix für eine anschliessende Analyse aufbereitet werden kann.

In einem besonders bevorzugten Verfahren wird die Probe im Pipettenspitzenbehälter mit einem Puffer, insbesondere mit einer Salzlösung versetzt.

In Varianten kann die Bearbeitung der Probe auch ohne Zusatz einer Substanz erfolgen.

Vorzugsweise umfasst die Bearbeitung der Probe ein Verdünnen der Probe. Dazu kann im Pipettenspitzenbehälter die Probe mit einer definierten Menge eines Lösemittels versetzt werden. Der Pipettenspitzenbehälter kann dazu entsprechend dimensioniert sein.

In Varianten kann auf die Verdünnung der Probe verzichtet werden.

Bevorzugt wird die Probe im Pipettenspitzenbehälter, insbesondere durch einfaches oder mehrfaches Aufziehen und Ausstossen durch eine Pipettenspitze, durchmischt. Damit kann eine homogene Lösung erreicht werden, womit wiederum eine robuste und reproduzierbare Analyse der Probe erreicht werden kann. Die Durchmischung der Probe kann aber auch anderweitig erfolgen, zum Beispiel durch Rütteln des Pipettenspitzenbehälters.

In Varianten kann auf die Durchmischung der Probe auch verzichtet werden.

Vorzugsweise umfasst die Bearbeitung der Probe ein Erwärmen und oder ein Abkühlen der Probe. Damit kann ein Lösungsprozess beeinflusst werden, insbesondere falls ein Stoff ausgefällt respektive aufgelöst werden soll. Besonders bevorzugt wird die Probe für die nachfolgende Analyse temperiert. Damit kann zum Beispiel die Präzision bei einer volumetrischen Dosierung erhöht werden. Durch die Erwärmung kann weiter ein Entgasen der Probe erreicht werden.

In Varianten kann auf das Erwärmen oder Abkühlen der Probe verzichtet werden.

Bevorzugt wird nach der Bearbeitung der Probe die Probe zumindest zum Teil aus dem Pipettenspitzenbehälter, insbesondere mit einer Pipettenspitze oder einer Spritze eines Autosamplers entnommen. Die Probe kann anschliessend weiter verarbeitet oder einer Analyse unterzogen werden.

In Varianten kann die Probe auch im Pipettenspitzenbehälter selbst analysiert werden.

Vorzugsweise wird nach der Bearbeitung der Probe die Probe, vorzugsweise bioanalytisch, insbesondere in Immunoassays, besonders bevorzugt mit ELISA (Assays basierend auf Enzymmarkierungen) analysiert. Andere bioanalytische Methoden können auch vorgesehen sein, so zum Beispiel RIA (Radioimmunassays) etc. Die Verwendung des Pipettenspitzenbehälters zur Bearbeitung einer Probe eignet sich insbesondere für Proben mit relativ geringen Volumina, welche für solche Analysen ausreichend sind.

In Varianten kann die Probe auch anderweitig analysiert werden insbesondere mit einem Chromatographen, vorzugsweise einem Flüssig-Chromatographen oder Gas-Chromatographen etc. Dem Fachmann sind beliebig viele Analysentechniken bekannt, welche in Abhängigkeit des in der Probe zu analysierenden Analyten durchgeführt werden können.

Bevorzugt wird die Pipettenspitze nach der Verwendung in einem Pipettenspitzenbehälter, vorzugsweise in dem ersten Pipettenspitzenbehälter entsorgt. Der Pipettenspitzenbehälter erfüllt damit drei Funktionen:
- Transport einer Pipettenspitze;
- Behälter für die Bearbeitung einer Probe;
- Entsorgungsbehälter.

Das Verfahren kann damit besonders ökonomisch durchgeführt werden, da kein separater Entsorgungsbehälter für die Pipettenspitze vorgesehen sein muss. Weiter wird damit auch ein besonders platzsparendes Verfahren erreicht, da kein zusätzlicher Platz für die Probenvorbereitung und einen Pipettenspitzen-Entsorgungsbehälter vorgesehen werden muss.

In Varianten kann die Pipettenspitze auch anderweitig, zum Beispiel in einem separaten Entsorgungsbehälter entsorgt werden.

Vorzugsweise wird die Probe nach der Bearbeitung, insbesondere ein Rest der Probe nach einer Analyse der Probe, in einem Pipettenspitzenbehälter, vorzugsweise in dem ersten Pipettenspitzenbehälter entsorgt. Wie bereits oben erwähnt, kann der erste Pipettenspitzenbehälter nach der Hauptverwendung, das heisst nach der Bearbeitung der Probe und nach einer allfälligen weiteren Verwendung, wie zum Beispiel einer Analyse oder dergleichen, als Entsorgungsbehälter verwendet werden. Im Pipettenspitzenbehälter kann die Probe und/oder die Pipettenspitze entsorgt werden. Dem Fachmann ist klar, dass auch weitere Substanzen und Gegenstände in dem Pipettenspitzenbehälter entsorgt werden können.

In Varianten kann die Probe auch anderweitig, zum Beispiel in einem separaten Proben-Entsorgungsbehälter entsorgt werden.

Bevorzugt bildet der erste Pipettenspitzenbehälter zusammen mit mehreren weiteren Pipettenspitzenbehälter ein Rack, wobei die erste Pipettenspitze mit dem Pipettierroboter derart verfahren wird, dass die erste Pipettenspitze ausschliesslich über Pipettenspitzenbehälter verfährt, welche nicht mehr verwendet werden.

Das Rack ist bevorzugt rechteckig ausgebildet und umfasst vorzugsweise mehrere parallele Zeilen an Pipettenspitzenbehälter. Besonders bevorzugt umfasst das Rack zwischen 2 und 20, besonders bevorzugt zwischen 4 und 12, insbesondere zum Beispiel 8 Zeilen mit jeweils vorzugsweise zwischen 2 und 20, besonders vorzugsweise zwischen 8 und 14 insbesondere zum Beispiel 12 Pipettenspitzenbehälter. Das Rack umfasst damit in der besonders bevorzugten Ausführungsform 8 Zeilen mit jeweils 12 Pipettenspitzenbehälter respektive 8 Zeilen und 12 Spalten. Daraus resultieren somit 96 Pipettenspitzenbehälter. Dem Fachmann ist jedoch klar, dass das Rack auch mehr oder weniger Pipettenspitzenbehälter in anderen Anordnungen umfassen kann. In der bevorzugten Ausführungsform hat ein Pipettenspitzenbehälter im Innern des Racks vier Pipettenspitzenbehälter als nächste Nachbarn. Insbesondere können die Pipettenspitzenbehälter-Zeilen zum Beispiel auch zueinander versetzt angeordnet sein, um einen kompakteren Aufbau des Racks zu erreichen. In diesem Fall hat ein Pipettenspitzenbehälter im Innern des Racks sechs Pipettenspitzenbehälter als nächste Nachbarn.

Im Verfahren wird nun die Pipettenspitze derart über dem Rack verfahren, dass insbesondere während oder nach einem Transport einer Flüssigkeit zu oder weg von einem Pipettenspitzenbehälter noch nicht verwendete Pipettenspitzen in den weiteren Pipettenspitzenbehälter nicht durch ein herfallender Tropfen von der Pipettenspitze kontaminiert werden können. Dazu wird die Pipettenspitze insbesondere während oder nach einem Transport einer Flüssigkeit bevorzugt ausschliesslich über bereits verwendeten Pipettenspitzenbehälter verfahren. Dieses Verfahren ist insbesondere bei Racks von Vorteil, welche über einen gemeinsamen Verschluss für alle Pipettenspitzenbehälter verfügen, zum Beispiel bei einem Rack, welches mit einer Abreissfolie verschlossen ist.

In Varianten können die Pipettenspitzenbehälter auch einzeln verschlossen sein. Weiter kann die Transporteinrichtung auch eine Tropfschutzeinrichtung umfassen, womit eine Kontamination der weiteren Pipettenspitzenbehälter vermieden werden kann.

In einer weiteren bevorzugten Ausführungsform werden mit dem Pipettierroboter gleichzeitig mehrere Pipettenspitzen aus mehreren Pipettenspitzenbehälter entnommen, wobei ebenfalls gleichzeitig Proben in die mehreren Pipettenspitzenbehälter, insbesondere mit den mehreren Pipettenspitzen eingefüllt werden. Auch die Bearbeitung der mehreren Proben kann gleichzeitig erfolgen.

In Varianten kann auch jede Pipettenspitze einzeln aus dem Pipettenspitzenbehälter entnommen werden. Das Einfüllen der Probe muss nicht bei mehreren Pipettenspitzenbehälter gleichzeitig erfolgen. Auch müssen nicht mehrere Proben in den Pipettenspitzenbehälter gleichzeitig bearbeitet werden.

Vorzugsweise bildet der erste Pipettenspitzenbehälter zusammen mit mehreren weiteren Pipettenspitzenbehälter ein Rack, wobei das Rack in eine Rackaufnahme einer Vorrichtung zur automatisierten Bearbeitung einer Probe eingesetzt wird und wobei eine Orientierung des Racks relativ zu der Rackaufnahme ermittelt wird. Dazu umfasst das Rack vorzugsweise Mittel zur Identifikation einer Ausrichtung einer Orientierung des Racks in einer Rackaufnahme einer Vorrichtung zur automatisierten Bearbeitung einer Probe. Damit kann kontrolliert werden, ob das Rack korrekt eingesetzt ist, bevor eine Pipettenspitze aus einem Pipettenspitzenbehälter des Racks entnommen wird. Weiter kann die Orientierung des Racks wesentlich sein, wenn im Rack mehrere unterschiedliche Pipettenspitzenbehälter und/oder Pipettenspitzen vorliegen, insbesondere wenn Pipettenspitzen für unterschiedliche Volumina etc. in einem Rack aufgenommen sind.

In Varianten kann das Rack auch derart ausgebildet sein, dass das Rack in unterschiedlichen Orientierungen in das Racks eingesetzt werden kann.

Vorzugsweise wird die Orientierung anhand eines Barcodes, insbesondere eines 2D-Barcodes auf dem Rack, ermittelt. Dazu umfasst das Rack vorzugsweise einen Barcode, besonders bevorzugt einen 2D-Barcode. Der Barcode kann jedoch mehr als eine Orientierung des Racks definieren. Der Barcode kann auch Daten über die Anzahl und Art der Pipettenspitzen respektive der Pipettenspitzenbehälter umfassen. Weiter können zum Beispiel Herstellerdaten wie zum Beispiel das Herstellungsdatum und der Hersteller etc. durch den Barcode festgehalten sein. Dem Fachmann sind weitere Daten bekannt, welche durch den Barcode umfasst sein können.

In Varianten kann auf den Barcode auch verzichtet werden. Statt eines Barcodes können auch andere Code-Typen vorgesehen sein.

Vorzugsweise ist der Code, insbesondere der Barcode (ein- oder zweidimensional) derart auf dem Rack angeordnet, dass der Code durch die Abreissfolie verdeckt ist. Das Verfahren kann in diesem Fall zum Beispiel nur dann gestartet werden, wenn der Code ausgelesen werden kann. Damit wird sichergestellt, dass im Verfahren die Abreissfolie entfernt ist.

Alternativ kann auf diese Anordnung des Barcodes auch verzichtet werden. Weiter kann alternativ oder zusätzlich ein Code, insbesondere ein Barcode auf der Abreissfolie angeordnet sein, womit durch auslesen dieses Codes überprüft werden kann, ob die Abreissfolie entfernt wurde.

In einer weiteren bevorzugten Variante ist die richtige Orientierung des Racks durch eine Poka-Yoke-Formgebung respektive durch eine mechanische Codierung erreicht. Dazu umfasst das Rack vorzugsweise eine mechanische Codierung, insbesondere einer Poka-Yoke-Formgebung, so dass das Rack in genau einer respektive ausschliesslich in zulässigen Orientierungen in die Rackaufnahme eingesetzt werden kann. Die Formgebung kann zum Beispiel Rippen umfassen, wobei die Rackaufnahme den Rippen entsprechende Ausnehmungen aufweist. Die Rippen sind derart angeordnet, dass das Rack nur in einer einzigen Orientierung in die Rackaufnahme eingesetzt werden kann.

In Varianten kann auf die Poka-Yoke-Formgebung auch verzichtet werden.

Ein Rack umfasst mindestens einen ersten Pipettenspitzenbehälter mit einer ersten Pipettenspitze zur Verwendung in einem Verfahren zur Bearbeitung einer Probe.

Das Rack ist vorzugsweise mit einer lösbaren Abdeckung, insbesondere einer Abreissfolie versehen. Die lösbare Abdeckung dient zum Verschliessen der Pipettenspitzenbehälter und damit zum steril halten der darin befindlichen Pipettenspitzen. Die lösbare Abdeckung, insbesondere in der Form einer Abreissfolie, hat den Vorteil, dass diese kostengünstig herstellbar ist. Weiter wird damit eine besonders einfach realisierte hermetische Abdichtung erreicht. Die Abreissfolie kann damit einen herkömmlichen Verschluss ersetzen. Insbesondere ist durch das Vorsehen der Abreissfolie kein weiterer Verschluss der Pipettenspitzenbehälter notwendig. Damit wird ein besonders platzsparendes Rack erhalten.

In Varianten kann der Deckel auch aus einem festen Material ausgebildet sein. Dem Fachmann sind beliebig viele Varianten zum Verschliessen von Öffnungen von Pipettenspitzenbehälter bekannt.

Vorzugsweise umfasst die Abreissfolie einen Code, insbesondere einen Barcode. Damit kann im Verfahren geprüft werden, ob die Abreissfolie vor dem Einsetzen des Racks in die Rackaufnahme entfernt wurde. Damit kann das Verfahren gestoppt werden, sofern die Abreissfolie detektiert wird, um Beschädigungen zu vermeiden.

In Varianten kann auf den Code auf der Abreissfolie verzichtet werden. Alternativ oder zusätzlich kann ein Code auf dem Rack selbst angeordnet sein. Insbesondere kann alternativ oder zusätzlich ein Code derart auf dem Rack angeordnet sein, dass der Code durch die Abreissfolie verdeckt wird (siehe oben).

Vorzugsweise sind die Pipettenspitzenbehälter des Racks als Deep-Well ausgebildet. Damit weisen die Pipettenspitzenbehälter vorzugsweise ein grosses Verhältnis zwischen einer Tiefe des Pipettenspitzenbehälters und dem Innendurchmesser gemessen an einem oberen Randbereich auf. Das Verhältnis Tiefe:Breite kann insbesondere in einem Bereich von 5:1 (d.h. die Tiefe ist fünfmal grösser als die Breite) bis 20:1, vorzugsweise in einem Bereich von 13:1 bis 15:1 liegen. Der Einsatz von Deep-Well hat den Vorteil, dass eine Probe im Bodenbereich der Pipettenspitzenbehälter bei relativ geringem Risiko einer Kontamination benachbarter Pipettenspitzenbehälter bearbeitet werden kann. Insbesondere wenn die Probe ein geringes Volumen aufweist, kann zum Beispiel ein Durchmischen der Probe mit einem Lösemittel durch Schütteln oder durch Aufziehen und Ausstossen mit einer Pipettenspitze durchgeführt werden, ohne dass die Probe aus dem Pipettenspitzenbehälter austreten kann.

In Varianten kann auf die Ausführung des Pipettenspitzenbehälters als Deep-Well verzichtet werden. In diesem Fall kann das Verhältnis zwischen Tiefe und Breite auch weniger als 5:1 betragen, insbesondere zum Beispiel 3:1 oder weniger.

Vorzugsweise sind die Öffnungen der Pipettenspitzenbehälter im Rack in einer Ebene, welch durch einen zur Ebene senkrechten Rand umgeben ist, wobei der Rand distal mit einer parallel zur Ebene ausgerichteten auskragenden Flansch versehen ist. Der Flansch kann zum Beispiel als Auflager in einer Rackaufnahme dienen. Der Flansch kann aussenseitig über Rippen am Rand abgestützt sein. In einer bevorzugten Ausführungsform sind die Rippen derart angeordnet, dass diese zusammen mit Ausnehmungen in der Rackaufnahme eine mechanische Poka-Yoke bilden, so dass das Rack in genau einer Orientierung in die Rackaufnahme eingesetzt werden kann. Dazu können zum Beispiel an einer Seite des Racks der Flansch über zwei und an einer dazu gegenüberliegenden Seite der Flansch über drei Rippen am Rand abgestützt sein.

Dem Fachmann ist jedoch klar, dass auf den Rand, den Flansch respektive die Rippen auch - gegebenenfalls teilweise - verzichtet werden kann.

Eine Transportanordnung umfasst mindestens zwei Racks, wobei mindestens ein Bodenbereich eines Pipettenspitzenbehälters eines ersten Racks in direktem Kontakt mit einer lösbaren Abdeckung, insbesondere einer Abreissfolie eines zweiten Racks steht. Herkömmlich werden Racks mit Pipettenspitzen einzeln rundum verpackt, zum Beispiel vollständig eingeschweisst. Durch die erfindungsgemässe Verpackung kann nun eine Transportanordnung unter Verwendung von besonders wenig Verpackungsmaterial erreicht werden, womit mehrere Racks besonders kostengünstig transportiert werden können.

In einem Verfahren zum Transportieren mindestens eines ersten und eines zweiten Racks wird das erste Rack in einen Transportbehälter positioniert wird und das zweite Rack derart auf dem ersten Rack positioniert, dass mindestens ein Bodenbereich eines Pipettenspitzenbehälters des ersten Racks in direktem Kontakt mit einer lösbaren Abdeckung, insbesondere einer Abreissfolie des zweiten Racks steht.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: einen schematischen Ablauf eines Verfahrens zur Bearbeitung einer Probe;
- Fig. 2: eine schematische Schrägansicht von oben auf ein Rack zur Verwendung in einem Verfahren zur Bearbeitung einer Probe;
- Fig. 3a: eine schematische Schrägansicht von unten auf eine erste Stirnseite eines Racks zur Verwendung in einem Verfahren zur Bearbeitung einer Probe;
- Fig. 3b: eine Ansicht gemäss Figur 3a auf eine der ersten Stirnseite gegenüberliegende Stirnseite des Racks; und
- Fig. 4: eine schematische Schnittdarstellung des Racks entlang einer Längsachse der Pipettenspitzenbehälter, rechtwinklig zu den Stirnseiten.

Grundsätzlich sind in den Figuren gleiche Teile mit gleichen Bezugszeichen versehen.

### Wege zur Ausführung der Erfindung

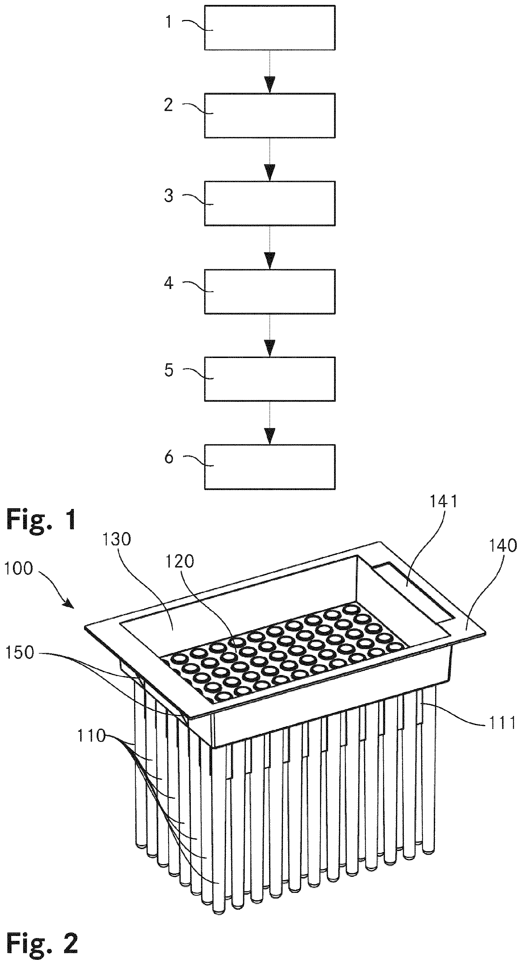

Die Figur 1 zeigt einen schematischen Ablauf eines Verfahrens zur Bearbeitung einer Probe. Das Verfahren läuft in einer ersten Variante wie folgt ab:
- Schritt 1:: Mit einem Pipettierroboter wird eine erste Pipettenspitze aus einem ersten Pipettenspitzenbehälter entnommen.
- Schritt 2:: Der Pipettierroboter verfährt mit der ersten Pipettenspitze zu einem Probenbehälter, entnimmt eine Probe und verfährt zurück zum ersten Pipettenspitzenbehälter.
- Schritt 3:: Der Pipettierroboter stösst die Probe in den ersten Pipettenspitzenbehälter aus.
- Schritt 4:: Die Probe wird im ersten Pipettenspitzenbehälter bearbeitet.
- Schritt 5:: Die bearbeitete Probe wird analysiert.
- Schritt 6:: Der Rest der bearbeiteten Probe sowie die Pipettenspitze werden in dem ersten Pipettenspitzenbehälter entsorgt.

In einer zweiten Variante wird die Probe mit einer zweiten Pipettenspitze entnommen und in den ersten Pipettenspitzenbehälter ausgestossen.

In einer dritten Variante wird die Probe ohne Verwendung einer Pipettenspitze vom Probenbehälter in den ersten Pipettenspitzenbehälter überführt.

Die Bearbeitung der Probe im Schritt 4 umfasst dabei in einer vierten Variante ein Verdünnen der Probe mit einem Lösemittel. Dazu wird mit einer Pipettenspitze das Lösemittel aus einem Lösemittelbehälter entnommen und in den ersten Pipettenspitzenbehälter ausgestossen. Um eine Durchmischung der verdünnten Probe zu erreichen, wird nach dem Ausstossen des Lösemittels die Mischung wiederholt aufgezogen und ausgestossen.

Im Anschluss an die Bearbeitung der Probe wird die bearbeitete Probe in einem Schritt 5 vorzugsweise einer Analyse unterzogen. Für die Analyse wird die bearbeitete Probe in einer fünften Variante zuerst bioanalytisch, insbesondere mittels ELISA analysiert und bevorzugt optisch ausgewertet. Weiter kann auch eine chromatographische Auftrennung vorgesehen sein, insbesondere mittels eines HPLC oder eine GC. Die Analyse kann mittels dem Fachmann bekannter Detektoren erfolgen, insbesondere einem Spektrometer (zum Beispiel einem UV/Vis-Detektor), Massenspektrometer etc. Dem Fachmann sind weitere Detektoren bekannt.

Im Verfahren werden vorzugsweise Racks eingesetzt, welche eine Vielzahl an Pipettenspitzenbehälter mit Pipettenspitzen umfassen. Anhand der Figuren 2 bis 4 ist eine mögliche Ausführungsform eines solchen Racks nachfolgend beschrieben.

Die Figur 2 zeigt eine schematische Schrägansicht von oben auf ein Rack 100 zur Verwendung in einem Verfahren zur Bearbeitung einer Probe.

Das Rack 100 umfasst vorliegend 8 Reihen à 12 Pipettenspitzenbehälter 110, somit gesamthaft 96 Pipettenspitzenbehälter 110. Die Pipettenspitzenbehälter 110 sind im Wesentlichen als längliche, einseitig geschlossene Kreiszylinder ausgebildet. Auf ungefähr einem Viertel der Gesamtlänge, angrenzend zu den Öffnungen 112 der Pipettenspitzenbehälter 110 weisen sie Verstrebungen 111 zwischen den vier benachbarten Pipettenspitzenbehälter 110 auf. Statt der Verstrebungen 111 können die Pipettenspitzenbehälter 110 in diesem Bereich auch vollständig miteinander vergossen sein. Die Öffnungen 112 der Pipettenspitzenbehälter 110 liegen in einer Platte 120. Die Platte 120 ist von einem rechteckigen Rahmen 130 umrandet, welcher senkrecht auf der Platte 120 steht. Der Rahmen 130 umfasst in einem Randbereich einen umlaufenden Flansch 140, welcher an zwei gegenüberliegenden Seiten des Rahmens 130 einen grösseren Überhang aufweist als an den anderen Seiten des Rahmens 130. Im Bereich des grösseren Überhangs ist der Flansch 140 über Rippen 150 am Rahmen 130 abgestützt. Die Rippen 150 weisen vorliegend eine Dreiecks-Form auf. In einem Bereich eines grösseren Überhang weist der Flansch 140 eine flächige Vertiefung 141 auf, in welcher ein Barcode (nicht dargestellt) angeordnet ist. Der Barcode dient zur Identifizierung des Racks 100, insbesondere der Art und Dimension der Pipettenspitzen und der Pipettenspitzenbehälter 110. Statt eines Barcodes (eindimensional respektive 1D) oder zum Beispiel als QR-Code (zweidimensional respektive 2D) oder in einer weiteren, dem Rack 100 angepassten Form vorliegen. Insbesondere können beliebige bekannte Codes vorgesehen sein.

In der vorliegenden Figur 2 sind keine Pipettenspitzen in den Pipettenspitzenbehälter 110 dargestellt. Die Pipettenspitzenbehälter 110 sind als sogenannte Deep-Well ausgebildet und weisen damit bezüglich eines maximalen Innendurchmessers eine relativ grosse Länge auf. Die Länge des Pipettenspitzenbehälters 110 entspricht rund 15-mal dem maximalen Innendurchmesser desselben. Die Erfindung ist jedoch nicht auf bestimmte Formen von Pipettenspitzenbehälter beschränkt. So können die Pipettenspitzenbehälter 110 auch andere Verhältnisse zwischen maximalem Innendurchmesser und Länge aufweisen.

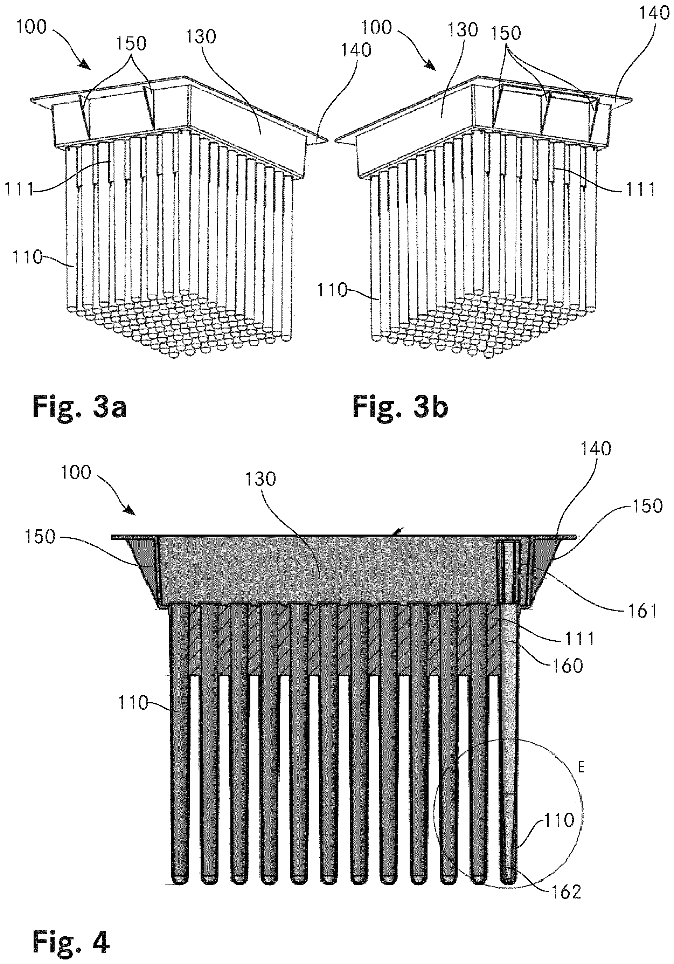

Die Figur 3a zeigt eine schematische Schrägansicht von unten auf eine erste Stirnseite des Racks 100 zur Verwendung in einem Verfahren zur Bearbeitung einer Probe. In dieser Darstellung ist ersichtlich, dass an der ersten Stirnseite der Flansch 140 über zwei Rippen 150 am Rahmen 130 abgestützt ist.

Die Figur 3b zeigt eine Ansicht gemäss der Figur 3a auf eine der ersten Stirnseite gegenüberliegende Stirnseite des Racks 100. Dabei ist ersichtlich, dass an der zweiten Stirnseite der Flansch 140 über drei Rippen 150 am Rahmen 130 abgestützt ist.

Die Rackaufnahme (nicht dargestellt) weist eine Ausnehmung gemäss den Aussenmassen des Rahmens 130 auf, so dass das Rack 100 in die Ausnehmung eingesetzt werden kann. Die Ausnehmung weist weiter auf einer Seite zwei Schlitze und auf der gegenüberliegenden Seite drei Schlitze auf, in welche die Rippen 150 eingeführt werden. Damit kann das Rack 100 in genau einer Orientierung in die Rackaufnahme eingesetzt werden.

Die Figur 4 zeigt eine schematische Schnittdarstellung des Racks 100 entlang einer Längsachse der Pipettenspitzenbehälter 110, rechtwinklig zu den Stirnseiten. In einem Pipettenspitzenbehälter 110 ist eine Pipettenspitze 160 angeordnet. Die Pipettenspitze 160 weist einen Kopfteil 161 auf, in welchen ein Pipettierroboter die Pipette einstecken kann. Die Pipettenspitze 160 wird sodann über Kraftschluss an der Pipette gehalten und kann aus dem Pipettenspitzenbehälter 110 entnommen werden. Die Pipettenspitze 160 weist eine Spitze 162 auf, welche tief in den Pipettenspitzenbehälter 110 hineinragt. Damit wird ermöglicht, dass mit der Pipettenspitze 160 eine Probe aus dem Pipettenspitzenbehälter 110 nahezu vollständig entnommen sowie durch Einziehen und Ausstossen eine Probe auch durchmischt werden kann.

Für die Lagerung und den Transport weist ein Rack 100, welches mit den Pipettenspitzen 160 gefüllt ist, eine Abreissfolie (nicht dargestellt) auf. Diese ist mit dem Flansch 140 verklebt. Die Racks 100 können ohne weitere Einzelverpackung direkt in Kisten verpackt werden, wobei Pipettenspitzenbehälter 110 eines ersten Racks 100 in direktem Kontakt mit einer Abreissfolie eines zweiten Racks 100 stehen.

Für die Anwendung des Verfahrens wird die Abreissfolie vom Rack 100 entfernt. Da damit sämtliche Pipettenspitzenbehälter 110 offen liegen, wird im Verfahren der Pipettierroboter derart verfahren, dass noch nicht verwendete Pipettenspitzen 160 respektive Pipettenspitzenbehälter 110 nicht überfahren werden. Damit wird eine Kontamination der sterilen Pipettenspitzen 160 respektive Pipettenspitzenbehälter 110 vermieden.

Zusammenfassend ist festzustellen, dass erfindungsgemäss ein Verfahren zur Bearbeitung einer Probe geschaffen wird, welches unter Verwendung weniger Ressourcen und mit relativ geringem Platzbedarf durchgeführt werden kann.

## Patentansprüche

1. Verfahren zur automatisierten Bearbeitung einer Probe unter Verwendung eines ersten Pipettenspitzenbehälters (110) mit einer ersten Pipettenspitze, umfassend die folgenden Schritte:
- Entnehmen der ersten Pipettenspitze (160) aus dem ersten Pipettenspitzenbehälter (110);
**gekennzeichnet durch** die folgenden Schritte:
- Einfüllen der Probe in den ersten Pipettenspitzenbehälter (110);
- Bearbeitung der Probe im ersten Pipettenspitzenbehälter (110).

2. Verfahren nach Anspruch 1, **dadurch gekennzeichnet, dass** die Pipettenspitze (160) durch einen Pipettierroboter verfahren wird.

3. Verfahren nach einem der Ansprüche 1 oder 2, **dadurch gekennzeichnet, dass** die Probe mit einer Pipettenspitze (160), insbesondere der ersten Pipettenspitze (160) in den ersten Pipettenspitzenbehälter (110) eingefüllt wird.

4. Verfahren nach einem der Ansprüche 1 bis 3, **dadurch gekennzeichnet, dass** die Bearbeitung der Probe ein Verdünnen der Probe umfasst.

5. Verfahren nach einem der Ansprüche 1 bis 4, **dadurch gekennzeichnet, dass** die Bearbeitung der Probe ein Aufziehen und Ausstossen durch eine Pipettenspitze (160), zur Durchmischung der Probe umfasst.

6. Verfahren nach einem der Ansprüche 1 bis 5, **dadurch gekennzeichnet, dass** nach der Bearbeitung der Probe die Probe zumindest zum Teil aus dem Pipettenspitzenbehälter (110), insbesondere mit einer Pipettenspitze (160) oder einer Spritze eines Autosamplers entnommen und vorzugsweise bioanalytisch, insbesondere in Immunoassays, besonders bevorzugt mit ELISA analysiert.

7. Verfahren nach einem der Ansprüche 1 bis 6, **dadurch gekennzeichnet, dass** die Pipettenspitze (160) nach der Verwendung in einem Pipettenspitzenbehälter (110), vorzugsweise in dem ersten Pipettenspitzenbehälter (110) entsorgt wird.

8. Verfahren nach einem der Ansprüche 1 bis 7, **dadurch gekennzeichnet, dass** die Probe nach der Bearbeitung, insbesondere ein Rest der Probe nach einer Analyse der Probe, in einem Pipettenspitzenbehälter (110), vorzugsweise in dem ersten Pipettenspitzenbehälter (110) entsorgt wird.

9. Verfahren nach einem der Ansprüche 1 bis 8, **dadurch gekennzeichnet, dass** der erste Pipettenspitzenbehälter (110) zusammen mit mehrere weiteren Pipettenspitzenbehälter (110) ein Rack (100) bildet, wobei die Pipettenspitze (160) mit dem Pipettierroboter derart verfahren wird, dass die Pipettenspitze (160) ausschliesslich über Pipettenspitzenbehälter (110) verfährt, welche nicht mehr verwendet werden.

10. Verfahren nach einem der Ansprüche 1 bis 9, **dadurch gekennzeichnet, dass** der erste Pipettenspitzenbehälter (110) zusammen mit mehreren weiteren Pipettenspitzenbehälter (110) ein Rack (100) bildet, wobei das Rack (100) in eine Rackaufnahme einer Vorrichtung zur automatisierten Bearbeitung einer Probe eingesetzt wird und wobei eine Orientierung des Racks (100) relativ zu der Rackaufnahme ermittelt wird.

11. Verfahren nach Anspruch 10, **dadurch gekennzeichnet, dass** die Orientierung anhand eines Barcodes, insbesondere eines 2D-Barcodes auf dem Rack (100), ermittelt wird.

12. Verfahren nach Anspruch 10 oder 11, **dadurch gekennzeichnet, dass** die Orientierung anhand einer mechanischen Codierung, insbesondere einer Poka-Yoke-Formgebung ermittelt wird.

13. Verwendung eines Pipettenspitzenbehälters (110) zur Bearbeitung einer Probe, wobei eine Probe in den ersten Pipettenspitzenbehälter (110) eingefüllt und die Probe im ersten Pipettenspitzenbehälter (110) bearbeitet wird.

## Claims

1. Method for automated processing of a sample using a first pipette tip container (110) having a first pipette tip, comprising the following steps:
- removing the first pipette tip (160) from the first pipette tip container (110);
**characterized by** the following steps:
- feeding the sample into the first pipette tip container (110);
- processing the sample in the first pipette tip container (110).

2. Method according to Claim 1, **characterized in that** the pipette tip (160) is moved by a pipetting robot.

3. Method according to either of Claims 1 and 2, **characterized in that** the sample is fed into the first pipette tip container (110) with a pipette tip (160), in particular the first pipette tip (160).

4. Method according to one of Claims 1 to 3, **characterized in that** the processing of the sample comprises diluting the sample.

5. Method according to one of Claims 1 to 4, **characterized in that** the processing of the sample comprises drawing up and discharging same by means of a pipette tip (160), for thoroughly mixing the sample.

6. Method according to one of Claims 1 to 5, **characterized in that**, after processing of the sample, the sample is at least partially removed from the pipette tip container (110), in particular with a pipette tip (160) or a syringe of an autosampler, and is preferably bioanalytically analyzed, in particular in immunoassays, particularly preferably with ELISA.

7. Method according to one of Claims 1 to 6, **characterized in that**, after use, the pipette tip (160) is disposed of in a pipette tip container (110), preferably in the first pipette tip container (110).

8. Method according to one of Claims 1 to 7, **characterized in that** the sample after processing, in particular a residue of the sample following analysis of the sample, is disposed of in a pipette tip container (110), preferably in the first pipette tip container (110).

9. Method according to one of Claims 1 to 8, **characterized in that** the first pipette tip container (110) together with a plurality of further pipette tip containers (110) forms a rack (100), wherein the pipette tip (160) is moved with the pipetting robot in such a manner that the pipette tip (160) moves exclusively over pipette tip containers (110) that are no longer used.

10. Method according to one of Claims 1 to 9, **characterized in that** the first pipette tip container (110) together with a plurality of further pipette tip containers (110) forms a rack (100), wherein the rack (100) is inserted into a rack receptacle of a device for automated processing of a sample, and wherein an orientation of the rack (100) relative to the rack receptacle is determined.

11. Method according to Claim 10, **characterized in that** the orientation is determined with reference to a barcode, in particular a 2D barcode on the rack (100).

12. Method according to Claim 10 or 11, **characterized in that** the orientation is determined with reference to a mechanical coding, in particular a Poka-Yoke shaping.

13. Use of a pipette tip container (110) for processing a sample, wherein a sample is feed into the first pipette tip container (110) and the sample is processed in the first pipette tip container (110).

## Revendications

1. Procédé pour le traitement automatisé d'un échantillon utilisant un premier récipient de pointes de pipette (110) comprenant une première pointe de pipette, comprenant les étapes suivantes :
- prélèvement de la première pointe de pipette (160) hors du premier récipient de pointes de pipette (110) ;
**caractérisé par** les étapes suivantes :
- remplissage de l'échantillon dans le premier récipient de pointes de pipette (110) ;
- traitement de l'échantillon dans le premier récipient de pointes de pipette (110).

2. Procédé selon la revendication 1, **caractérisé en ce que** la pointe de pipette (160) est déplacée par un robot à pipettes.

3. Procédé selon l'une des revendications 1 ou 2, **caractérisé en ce que** l'échantillon est rempli dans le récipient de pointes de pipette (110) avec une pointe de pipette (160), en particulier la première pointe de pipette (160).

4. Procédé selon l'une des revendications 1 à 3, **caractérisé en ce que** le traitement de l'échantillon comprend une dilution de l'échantillon.

5. Procédé selon l'une des revendications 1 à 4, **caractérisé en ce que** le traitement de l'échantillon comprend une montée et une éjection à travers une pointe de pipette (160) pour mélanger l'échantillon.

6. Procédé selon l'une des revendications 1 à 5, **caractérisé en ce qu'**après le traitement de l'échantillon, l'échantillon est prélevé au moins en partie hors du récipient de pointes de pipette (110), en particulier avec une pointe de pipette (160) ou une aiguille d'un passeur d'échantillons et analysé de préférence de manière bioanalytique, en particulier en immuno-essais, particulièrement de préférence avec ELISA.

7. Procédé selon l'une des revendications 1 à 6, **caractérisé en ce que** la pointe de pipette (160), après l'utilisation, est éliminée dans un récipient de pointes de pipette (110), en particulier dans le premier récipient de pointes de pipette (110) .

8. Procédé selon l'une des revendications 1 à 7, **caractérisé en ce que** l'échantillon, après le traitement, en particulier un reste de l'échantillon après une analyse de l'échantillon, est éliminé dans un récipient de pointes de pipette (110), en particulier dans le premier récipient de pointes de pipette (110).

9. Procédé selon l'une des revendications 1 à 8, **caractérisé en ce que** le premier récipient de pointes de pipette (110) forme un rack (100) conjointement avec plusieurs autres récipients de pointe de pipette (110), dans lequel la pointe de pipette (160) est ainsi déplacée avec le robot à pipettes que la pointe de pipette (160) se déplace exclusivement au-dessus de récipients de pointe de pipette (110) qui ne sont plus utilisés,

10. Procédé selon l'une des revendications 1 à 9, **caractérisé en ce que** le premier récipient de pointes de pipette (110) forme un rack (100) conjointement avec plusieurs autres récipients de pointe de pipette (110), dans lequel le rack (100) est inséré dans une réception de rack d'un dispositif pour le traitement automatique d'un échantillon, et dans lequel une orientation du rack (100) est déterminée par rapport à la réception de rack.

11. Procédé selon la revendication 10, **caractérisé en ce que** l'orientation est déterminée à l'aide d'un code-barres, en particulier d'un code-barres 2D sur le rack (100).

12. Procédé selon la revendication 10 ou 11, **caractérisé en ce que** l'orientation est déterminée à l'aide d'un codage mécanique, en particulier d'une forme de détrompeur (poka-yoke).

13. Utilisation d'un récipient de pointes de pipette (110) pour le traitement d'un échantillon, dans lequel un échantillon est rempli dans le premier récipient de pointes de pipette (110) et l'échantillon est traité dans le premier récipient de pointes de pipette (110).
